# EUROPÄISCHE PATENTSCHRIFT

(11) **EP 0 680 395 B1**
(45) Veröffentlichungstag und Bekanntmachung des Hinweises auf die Patenterteilung: **21.08.1996**
(21) Anmeldenummer: 94921786.3
(22) Anmeldetag: 10.08.1994
(51) Int. Cl.: B23D 61/18, F16G 11/08

(54) **SAEGESEILVERSCHLUSS**
CLOSURE FOR SAW CABLES
DISPOSITIF DE FERMETURE DE FILS DE SCIES

(30) Priorität: 23.08.1993 AT 1693/93
(43) Veröffentlichungstag der Anmeldung: 08.11.1995
(73) Patentinhaber: Tyrolit Schleifmittelwerke Swarovski KG, A-6130 Schwaz (AT)
(72) Erfinder: PLATTNER, Josef, A-6200 Jenbach (AT)
(86) Internationale Anmeldenummer: IB9400245
(87) Internationale Veröffentlichungsnummer: WO9505914

(56) Entgegenhaltungen:
- EP-A- 0 489 357
- FR-A- 413 530
- FR-A- 1 357 117
- FR-A- 2 574 512
- GB-A- 1 241 951
- US-A- 4 015 931

## Beschreibung

Die Erfindung bezieht sich auf ein Sägeseil als Werkzeug für Seilsägemaschinen zum Schneiden von metallischen und insbesondere mineralischen Werkstoffen wie Beton, Naturstein und dergleichen mit einem aus mehreren Drähten bestehenden Stahlseil, auf dem in regelmäßigen Abständen vorzugweise metallisch gebundene, Hochleistungsschneidstoff enthaltende Schneidperlen angeordnet sind, wobei die Seienden eines oder mehrerer Seilstücke mittels eines Verschlusses verbunden sind.

Mindestens ein Verschluß ist für den Sägeseileinsatz auf Seilsägemaschinen notwendig, insbesondere wenn mit geschlossener Seilschleife gearbeitet wird. Dabei kann es zum Zusammenschluß mehrerer Seilstücke zu einer geschlossenen Seilschleife kommen, sodaß mehrere Seilverschlüsse, z. B. nach Seilrissen, in einem Werkzeug vorkommen.

Nach dem Stand der Technik findet man verschiedene Typen von Seilsägeverschlüssen:

Eine bekannte Methode zum Verbinden von Seilenden ist das Spleißen. Diese Methode wird für die Verbindung der Seilenden eines mit Diamantschneidperlen bestückten Sägeseils in der EP 160625A2 beschrieben. Spleißen von Drahtseilen kann nicht als ausreichend leicht durchführbare, sichere und präzise Methode zur Verbindung von Seilsägeenden angesehen werden, weswegen diese Methode hauptsächlich in stationären Anlagen angewendet wird.

Gespleißte Sägeseile können nicht zum Herstellen von Innenkonturen verwendet werden. Reparaturen von gespleißten Sägeseilen können im Normalfall nicht vor Ort, sondern nur nach Rücksendung zum Hersteller durchgeführt werden.

Die US - PS 3100323 zeigt eine Seilkupplung, wobei die beiden Seilenden mit Nippeln versehen sind, welche durch eine seitliche Öffnung in eine Verbindungshülse eingehängt werden und dadurch eine rasch lösbare Verbindung herstellen. Da in dieser Patentschritt runde Nippeln in einem runden Sitz der Verbindungshülse verwendet werden, ist diese Konstruktion für Sägeseile in Seilsägemaschinen wenig geeignet, da kein Drehmoment um die Längsachse des Seils übertragen werden kann.

Eine ähnlich wirkende Seilsägekupplung zeigen die US - PS 2036172 und die CH - PS 15168. Bei beiden Lösungen können keine Drehmomente um die Seilachse übertragen werden.

In der Lösung für einen Verschluß für Treibriemen nach der CH - PS 85444, welche die Verbindung der beiden Seienden durch seitliches Einführen eines Kugelkopfes in den Sitz der Verschlußhülse vorsieht, ist die Übertragbarkeit von Drehmomenten um die eigene Seilachse durch einen Steg zwischen Kugelkopf und Seilendstück entlang des Halses gegeben. Trotzdem ist diese Lösung für die Anwendung in Sägeseilen ungeeignet, da durch die Biegemomente, welche beim Durchgang des Sägeseilverschlusses durch die Rollen der Seilsägemaschine oder durch das Werkstück auftreten, die zugehörige Gelenkspfanne des zweiten Seiendes aufgeweitet und der Kugelkopf herausgezogen werden kann.

Die EP 317965A2 zeigt einen Schraubverschluß zum Verbinden der Seilenden. Die letzte Schneidperle an jedem Seilende ist mit einem Gewindefortsatz versehen, in dem die Seilenden verankert sind. Über die beiden Gewindefortsätze wird eine Gewindehülse geschraubt.

Die GB - PS 884473 zeigt ebenso einen Schraubverschluß.

Die EP 414280A2 hat einen Gewindeverschluß für Sägeseile zum Inhalt, bei dem durch gezielte Auswahl der Gewindelängen ein Vorteil bei der Fügung und Trennung der beiden Seilenden beschrieben wird. Zusätzlich ist eine Verdrehsicherung im Kopfbereich der beiden Seilendstücke mittels einer in eine Nut eingreifenden Querrippe vorgesehen. Diese Querrippe wäre sehr gut in der Lage, neben der Verdrehsicherung auch die an Hand der vorbesprochenen Dokumente zum Stand der Technik geforderte Drehmomentübertragung zu gewährleisten.

Gemeinsamer Nachteil der auf Klemm- oder Schraubhülsen beruhenden Sägeseilverschlüsse ist die Starrheit gegenüber Verbiegung, was zu konkavem Abrasionsverschleiß der Hülsen führt. Die so entstehende Einschnürung in der Mitte solcher Hülsen kann zu vorzeitigem Ausfall des Sägeseils führen.

Die in der Praxis anzutreffenden Lösungen nach dem Stand der Technik des Seilsägens mit Diamant enthaltenden Werkzeugen sind im Bereich des Verschlußkörpers starr und erlauben keine Biegung, wodurch sehr hohe Biegewechselbeanspruchungen an das Drahtseil im Nahbereich der Verschlußhülsen auf beiden Seiten des Sägeseilverschlusses verlagert werden. Dieser Siegewechselbeanspruchung sind noch die Zugkräfte und die Drehmomente um die Seilachse überlagert. Dem so entstehenden komplizierten Beanspruchungsfall können die Seile nicht ausreichend standhalten und brechen vorzeitig. Erwünscht wäre mindestens die gleiche Standzeit dieses gefährdeten Seilbereiches wie jene, die von den Schneidperlen erreicht wird.

Aufgabe der Erfindung ist daher, eine Sägeseilverschlußbauform zu entwickeln, welche die folgenden Grundforderungen erfüllt:
- hoher Verschleißwiderstand gegenüber Spanpartikeln und beim Überlauf von Werkstückkanten;
- ausreichende übertragbare Zugkraft;
- Übertragbarkeit von Drehmomenten um die Seilachse;
- Sicherheit gegen unbeabsichtigtes Lösen;
- rascher und wiederholbarer Füge- bzw. Trennvorgang bei Werkzeugreparaturen und Werkstückwechsel beispielsweise bei Bearbeitung von Innenkonturen;
- höhere Biegewechselfestigkeit.

Diese Aufgabe wird erfindungsgemäß gelöst durch ein Sägeseil nach Anspruch 1. Die geometrischen Achsen der Gelenkbolzen im Zwischenstück kreuzen einander dabei unter einem rechten Winkel und mit einem Abstand voneinander, der bevorzugt etwa dem Schneidperlendurchmesser entspricht.

Ein Ausführungsbeispiel der Erfindung hat ein Gelenkkreuz als Zwischenstück, wodurch die rechtwinkeligen Gelenkachsen in einer geometrischen Ebene zu liegen kommen.

Für die Ausgestaltung der gelenkigen Verbindung zwischen links- bzw. rechtsseitigem Gabelstück und Zwischenstück mittels Gelenkbolzen sind mehrere Ausführungsformen erfindungsgemäß vorgesehen, die nicht alle im einzelnen zeichnerisch dargestellt werden.

Ausführungsform eines Gelenkbolzens kann ein Kerbstift, ein Schraubbolzen, ein Paßstift, ein Bundbolzen, ein konischer Stift und dergleichen und eine Kombination mehrerer Ausführungsformen sein.

Erfindungsgemäß ist vorgesehen, daß der Sägeseilverschluß rasch, problemlos und wiederholt auch vor Ort geöffnet und geschlossen werden kann, ohne daß schwere, unfallträchtige Vorrichtungen in Stellung gebracht werden müssen zum Abtrennen von Tragseilzonen und Wiederbefestigen von Sägeseilanschlußbauteilen wie nach dem Stand der Technik erforderlich ist. Dies geschieht durch einfache Demontage und Montage eines der beiden Gelenkbolzen, wobei als zusätzlicher Vorteil anzusehen ist, daß kein Verlust von teuren Diamantwerkzeugteilen auftreten kann.

Bei der Auswahl der Ausführungsform eines erfindungsgemäßen Gelenkbolzens ist lediglich auf die Sicherungsmöglichkeit gegen axiale Verschiebung des Gelenkbolzens nach Montage Bedacht zu nehmen.

Eine bevorzugte Sicherung eines Gelenkbolzens ist die einseitige Vernietung mittels Körner oder Nietzange, während das gegenüberliegende Gelenkbolzenende konisch ausgebildet ist und in einer entsprechenden axialen Ausnehmung der Wange des Gabelstücks sitzt. Dadurch ergibt sich eine formschlüssige Verbindung mit den Gabelstücken während die Drehbarkeit um die Gelenkachsen innerhalb der Bohrung des Zwischenstücks vorgesehen ist.

Diese Ausführungsform hat sich nicht zuletzt wegen ihrer geringen Störanfälligkeit gegenüber abriebhaltiger Spülflüssigkeit bewährt. Es ist aber auch eine axiale Verschiebesicherung bei der Verlegung des Festlagers in das Zwischenstück und des Loslagers in die beiden Gabelstücke erfindungsgemäß vorgesehen. Eine Ausführungsform nach diesem Prinzip ist die Anwendung eines Kerbstiftes als Gelenkbolzen, wobei eine oder mehrere Kerben im Bereich des Zwischenstücks eingreifen und die Drehbarkeit im Gabelstück vorgesehen ist.

Entsprechend den erwähnten Ausführungsformen von erfindungsgemäßen Gelenkbolzen und deren Kombination ist lediglich stets für die Heranziehung eines zugehörigen, meist genormten und käuflichen Sicherungsmittels gegen nachträgliche axiale Verschiebung des Gelenkbolzens zu sorgen. So sind für Bundbolzen, Paßstifte und dergleichen Splintsicherungen, Seegerringe, Punktschweißen und dergeichen und für Schraubbolzen eine Verklebungssicherung, vorgesehen.

Für alle Ausführungsformen der Erfindung ist eine mögliche Weiterbildung die Verwendung von Ringen bzw. Hülsen axialer und radialer Bauart, bestehend aus verschleißhemmendem und/oder schmierstoffhaltendem Material zwischen den beweglichen Teilen des Sägeseilverschlusses.

Nachfolgend werden anhand der Zeichnung Ausführungsbeispiele der Erfindung und Vergleichsversuche beschrieben. Es zeigt:
Figur 1 einen erfindungsgemäßen Sägeseilverschluß in axonometrischer Darstellung;
Figur 2 einen erfindungsgemäßen Sägeseilverschluß im gebrauchsfertig montierten Zustand in Ouerschnittsdarstellung;
Figur 3 eine erfindungsgemäße Ausführung eines Sägeseilverschlusses, wobei der Gelenkbolzen (3) als Kerbstift vorgesehen ist;
Figur 4 eine Ausführungsform der erfindungsgemäßen gelenkigen Sägeseilkupplung unter Verwendung von Gewindebolzen (8) als Gelenkbolzen;
Figur 5 eine Ausführungsform eines erfindungsgemäßen Zwischenstücks mit Hülse (9);
Figur 6 eine Ausführungsform eines erfindungsgemäßen Sägeseilverschlusses mit einem Gelenkkreuz (10) als Zwischenstück;
Figur 7 das Prinzip eines Sägeseilverschlußprüfstandes;
Figur 8 eine graphische Gegenüberstellung von erreichten Standzeiten verschiedener Sägeseilverschlußbauformen.

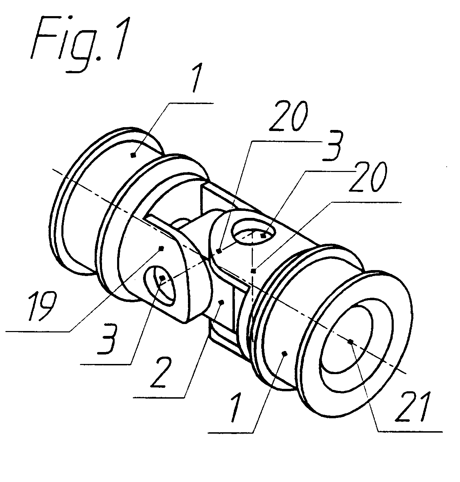

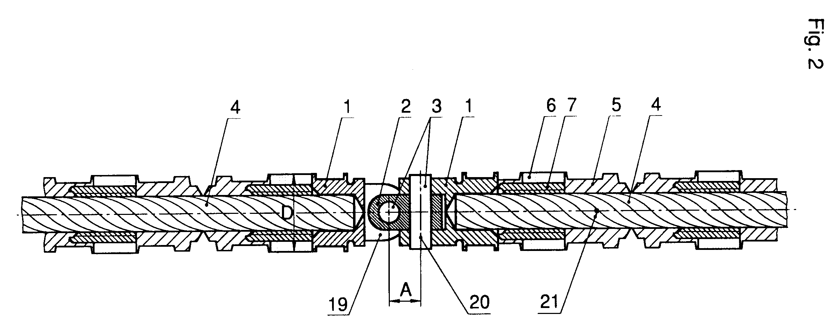

In den Figuren 1 und 2 ist der Sägeseilverschluß prinzipmäßig dargestellt. Er besteht aus einem links- und einem rechtsseitigen Gabelstück (1), das den Abschluß des jeweiligen Tragseilendes (4) bildet, einem Gelenkbolzen (3), der in entsprechende Ausnehmungen (13) der Wangen eines jeden Gabelstückes (1) eingreift und einem Zwischenstück (2), das die beiden Gelenkbolzen (3) drehbar im Raum zwischen den Wangen (19) der beiden Gabelstücke (1) umschließt.

Die geometrischen Achsen (20) der beiden Gelenkbolzen (3) kreuzen einander unter einem rechten Winkel im Abstand (A), der bevorzugt 0,8 bis 1,2 mal dem Durchmesser (D) der Schneidperlen ist. Die Gelenkstücke (1) sind in bekannter Weise mit einem Quetschhülsenfortsatz am Tragseilende (4) festgequetscht.

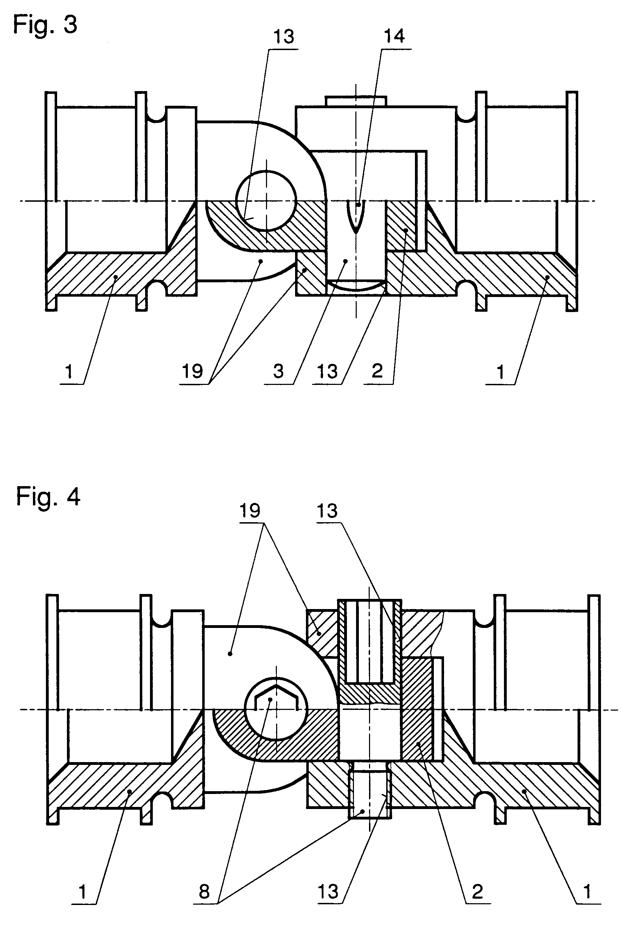

Fig. 3 zeigt die Lagesicherung eines Gelenkbolzens (3) durch eine oder mehrere Kerben (14) in der mittleren Anordnung bezüglich des Zwischenstücks (2), wodurch Kraftschluß zwischen den Gelenkbolzen (3) und dem Zwischenstück (2) hergestellt wird. Die Gabelstücke (1) sind um die um 90° gegeneinander verdrehten Gelenkbolzen (3) in den Ausnehmungen (13) frei drehbar. Vorteilhaft wird bei dieser Ausführungsform ein Normteil wie z.B. ein Kerbstift nach DIN 1475 eingesetzt.

In der Fig. 4 ist eine Ausführungsform mit Schraubbolzen (8) als Gelenkbolzen dargestellt. In diesem Ausführungsbeispiel ist die leichte und wiederholbare Fügung und Trennung als eine der Aufgaben der Erfindung besonders vorteilhaft erfüllt. Ein Schraubbolzen (8) greift auf einer Wange (19) des Verschlußstücks (1) mit einem Gewinde und auf der gegenüberliegenden Wange (19) mit einem zylindrischen Durchgangsbereich ein, wobei im zylindrischen Bereich ein Innensechskant für den Werkzeugeinsatz für den Schraubanzug gegen die eine Wange vorgesehen ist. Als Sicherung gegen unbeabsichtigtes Lösen des Schraubbolzens ist ohne zeichnerische Darstellung Körnerschlag und/oder Gewindeverklebung vorgesehen.

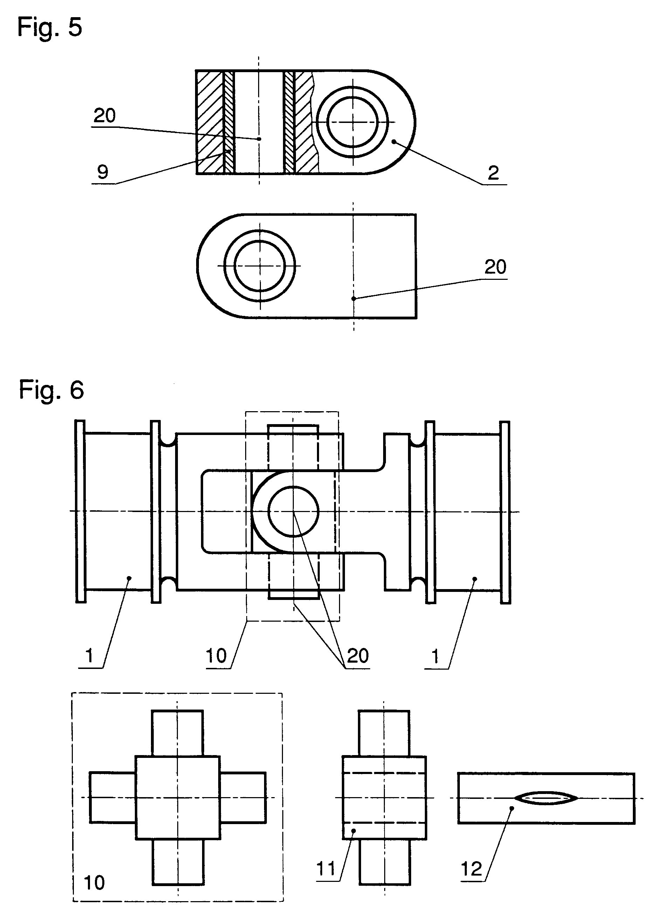

Fig. 5 zeigt ein erfindungsgemäßes Ausführungsbeispiel eines Zwischenstückes (2) mit der Anordnung einer Hülse (9) in den Bohrungen für die beiden Gelenkbolzen (3) zur Verschleißminderung zwischen Gelenkbolzen und Zwischenstück während deren gegenseitiger umlaufbedingter Schwenkbewegung. Es sind an sich bekannte Stoffe, bevorzugt Schmiermittel enthaltend, als Werkstoff für die Hülse (9) vorgesehen. Zeichnerisch nicht dargestellt ist eine Ausgestaltung eines verschleißhemmenden Elementes, angeordnet als Ring zwischen Wange (19) des Gelenkstücks (1) und Zwischenstück (2), wobei ein handelsüblicher O-Ring einsetzbar ist.

Fig. 6 zeigt eine Ausführungsform eines erfindungsgemäßen Seilsägeverschlusses mit einem Gelenkkreuz (10) als Sonderfall eines Zwischenstücks. Beim Gelenkkreuz (10) liegen die sich unter einem rechten Winkel kreuzenden Drehachsen (20) in einer geometrischen Ebene. Diese Ausführungsform hat gegenüber Ausführungsformen mit entsprechendem Abstand (A) zwischen den sich kreuzenden Gelenksachsen (20) erhöhten Platzbedarf für die Montage des Gelenkkreuzes (10). Dies geschieht durch Querverschiebbarkeit des Gelenkkreuzes (10) im Raum zwischen den Wangen (19) des Gabelstücks (10).

Auf einer Versuchsanlage wurden Sägeseilverschlüsse nach dem Stand der Technik mit einem erfindungsgemäßen Gelenkverschluß verglichen. Dabei kamen folgende Verschlußtypen zum Einsatz:
- Verschluß Nr. 1:: Stahlschraubverschluß mit kantiger Fase, Material ETG 25
- Verschluß Nr. 2:: Stahlschraubverschluß mit runder Fase, Material ETG 25
- Verschluß Nr. 3:: Stahlschraubverschluß mit kantiger Fase, Material C 35
- Verschluß Nr. 4:: Stahlreparaturverschluß mit kantiger Fase, Material ETG 25 (Klemmhülsenverschluß)
- Verschluß Nr. 5:: Kupferreparaturverschluß kurz mit kantiger Fase, Material E-Cu-F25 (Klemmhülsenverschluß)
- Verschluß Nr. 6:: Kupferreparaturverschluß lang mit kantiger Fase, Material E-Cu-F 25 (Klemmhülsenverschluß)
- Verschluß Nr. 7:: erfindungsgemäßer Gelenkverschluß gemäß Fig. 1 und Fig. 2

Es wurde mit einer Umlaufgeschwindigkeit von 20 m/s und einer Seilspannung von 350 N gefahren.

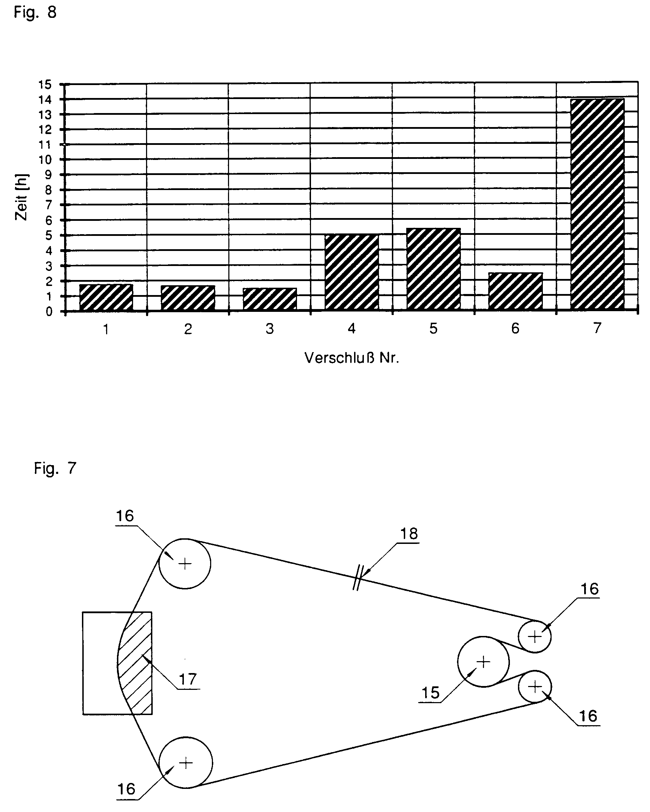

Fig. 7 zeigt schematisch die Versuchsanordnung. Um den Einfluß der Verschlußbauform auf die Biegewechselbeständigkeit der verschlußnahen Tragseilbereiche störungsfrei ermitteln zu können, wurde mit ein- und demselben Sägeseil ohne Beaufschlagung des Werkstücks (17) gefahren.

Fig. 8 zeigt die dabei erhaltene Lebensdauer in Stunden in Balkendarstellung. Den Spitzenwert von angenähert 14 Stunden Standzeit erreichte der erfindungsgemäße Gelenkverschluß. Demnach sichern zwei sich unter 90° kreuzende Gelenksteile eine allseitige Verbiegbarkeit, die Übertragbarkeit von höchsten Zugkräften und die Übertragbarkeit von beabsichtigten oder unbeabsichtigten Drehmomenten um die Seilachse auf bisher nicht bekannte vorteilhafte Weise. Die Seilbrüche im Nahbereich der Seilendstücke, im erfindungsgemäßem Beispiel der Gabelstücke (1), werden vermieden.

Mit dem Sägeseilgelenkverschluß gemäß der vorliegenden Erfindung werden gleichzeitig folgende Forderungen an Sägeseilverschlüsse erfüllbar:
1. Vermeidung des gefürchteten Seilbruchs im Nahbereich der Seilendstücke bisher bekannter Verschlußlösungen.
2. Verschleißminderung im Bereich des Sägeseilverschlusses, insbesondere Vermeidung des schwerwiegenden konkaven Reibverschleißes bei Klemm- und Schraubhülsenverschlüssen.
3. Verminderung der Personalkosten und erhöhte Anlagenzeitausnützung.
4. Erhöhte Zerspanungsrate durch erhöhte Vorschubgeschwindigkeit und höhere erlaubte Seilzugkräfte.
5. Verbesserte Schnittqualität mit geringerer Nacharbeit am Werkstück.
6. Übertragbarkeit von Drehmomenten um die Seilachse, die beabsichtigt oder unbeabsichtigt entstehen können wie z. B. beim Voreindrehen des Sägeseils vor dem Schließen der Schlaufe, durch beabsichtigtes in Drehung Versetzen des Sägeseils nach der anmeldereigenen Patentanmeldung A 2080/92 oder durch verschiedene Ungleichmäßigkeiten im Gesamtsystem Maschine - Werkstück - Werkzeug.
7. Einfaches Öffnen und Schließen des Sägeseilwerkzeuges.
8. Verschieißminderung im Verschlußbereich des Sägeseils durch sehr geringe Baulänge des Gelenkverschlusses, wodurch die Schneidperlenteilung nur geringfügig vergrößert wird.
9. Geräuschloser und geschmeidiger Lauf des Sägeseils durch widerstandsfreie Beweglichkeit des Sägeseilverschlusses in allen Winkeln.
10. Möglichkeit zur Verringerung der Rollendurchmesser der Seilsägemaschine, was zu verbesserter Handhabbarkeit und Mobilität und zu weiterer Verbreitung des Verfahrens führt.
11. Erhöhung der Gesamtwirtschaftlichkeit der Seilsägeverfahren.

### Liste der verwendeten Bezugszeichen

- 1: Gabelstück
- 2: Zwischenstück
- 3: Gelenkbolzen
- 4: Drahtseil
- 5: elastisches Distanzstück
- 6: Schneidperle
- 7: elastisches Füllmaterial
- 8: Schraubbolzen
- 9: Hülse
- 10: Gelenkkreuz
- 11: Gelenkkreuz - Drehteil
- 12: Gelenkkreuz - Kerbstift
- 13: Ausnehmung in Wange des Gabelstücks (1)
- 14: Kerbe
- 15: Antriebsrolle
- 16: Umlenkrolle
- 17: Werkstück
- 18: Sägeseilverschluß
- 19: Wange des Gabelstücks
- 20: Gelenkachse
- 21: Sägeseillängsachse
- D: Nenndurchmesser der Schneidperlen
- A: Achsenabstand der Gelenkachsen im Zwischenstück (2)

## Patentansprüche

1. Sägeseil zum Sägen von metallischen bzw. von mineralischen oder Mineralstoff enthaltenden Werkstoffen in Seilsägemaschinen, wobei das aus mehreren Metalldrähten geflochtene Sägeseil (4) Schneidperlen (6) aufweist, die Hochleistungsschleifmittel wie Diamant und/oder kubisches Bornitrid in einem Bindemittel enthalten und das Sägeseil (4) einen oder mehrere Verschlüsse enthält, dadurch gekennzeichnet, daß
a) der Verschluß aus einem Doppelgelenk mit zwei einander unter einem Winkel von 90° kreuzenden Gelenkachsen (20) gebildet ist,
b) jeder der beiden Gelenkteile aus einem am jeweiligen Sägeseilende befestigten Gabelstück (1) mit zwei Wangen (19), einem Gelenkbolzen (3) und einem gemeinsamen Zwischenstück (2) besteht und
c) die beiden Wangen (19) eines jeden Gabelstücks (1) durch den Gelenkbolzen (3) mit dem gemeinsamen Zwischenstück (2) drehbar verbunden sind.

2. Sägeseil nach Anspruch 1, dadurch gekennzeichnet, daß die einander unter einem Winkel von 90° kreuzenden Gelenkachsen (20) im Zwischenstück (2) einen Abstand (A) voneinander von Null bis 3 mal, bevorzugt von 0,8 bis 1,2 mal dem Nenndurchmesser (D) der Schneidperlen (6) aufweisen.

3. Sägeseil nach Anspruch 1 oder 2, dadurch gekennzeichnet, daß die um 90° gekreuzten Gelenkachsen (20) im Zwischenstück (2) in einer geometrischen Ebene liegen, die normal zur Sägeseillängsachse (21) steht.

4. Sägeseil nach Anspruch 3, dadurch gekennzeichnet, daß das Zwischenstück als Gelenkkreuz (10) ausgebildet ist.

5. Sägeseil nach Anspruch 1 oder 2, dadurch gekennzeichnet, daß die Gelenkbolzen als Schraubbolzen (8) ausgebildet sind, wobei das Gewinde des Schraubbolzens (8) in der Ausnehmung (13) der einen Wange und der Kopf des Schraubbolzens (8) in der Ausnehmung (13) der gegenüberliegenden Wange eines jeden Gabelstückes (1) eingreift und der frei bewegliche Bereich des Gelenkes im Zwischenstück (2) angeordnet ist.

6. Sägeseil nach Anspruch 1 oder 4, dadurch gekennzeichnet, daß die Gelenkbolzen (3, 12) mit einer oder mehreren Kerben (14) zur Lagesicherung versehen sind.

7. Sägeseil nach Anspruch 1, dadurch gekennzeichnet, daß die Gelenkbolzen (3, 8) durch Splint, Seegerring, nieten, kleben oder Punktschweißen im Gabelstück fixiert sind.

8. Sägeseil nach Anspruch 1, dadurch gekennzeichnet, daß zwischen Gelenkbolzen (3, 8) und Zwischenstück (2) eine Hülse (9) eingebaut ist.

## Claims

1. Cutting wire for cutting metallic or mineral materials or such materials that contain mineral substances in wire sawing machines, whereby the cutting wire (4) is made of several intertwined strands of metal wire and has cutting beads (6) containing bonded superabrasives, such as diamond and/or cubic boron nitride and whereby the cutting wire (4) has one or more connectors, said connector being characterised by the fact that
a) the connector is formed by a double joint with two joint axes (20) intersecting at an angle of 90°,
b) each of the two parts of the joint consists of a fork (1) with two sides (19) being affixed to the respective wire end, a joint pin (3), and a common intermediate part (2), and
c) that the two sides (19) of each fork (1) are connected with the common intermediate part (2) by means of joint pins (3) in such a way that rotation can be ensured.

2. Cutting wire according to claim 1, characterised by the fact that the joint axes intersecting at an angle of 90° (20) have, in the intermediate part (2), a distance (A) from each other which is zero to 3 times, preferably 0.8 to 1.2 times the nominal diameter (D) of the cutting beads (6).

3. Cutting wire according to claims 1 or 2, characterised by the fact that the joint axes intersecting at an angle of 90° (20) lie, in the intermediate part (2), in a geometric plane which is perpendicular to the longitudinal axis of the cutting wire (21).

4. Cutting wire according to claim 3, characterised by the fact that the intermediate part is constructed as a universal joint spider (10).

5. Cutting wire according to claim 1 or 2, characterised by the fact that the joint pins are constructed as screw bolts (8), with the thread of the screw bolt (8) engaging the recess (13) of the one side and the head of the screw bolt engaging the recess (13) of the opposite side of each fork (1) and that the freely movable area of the joint is provided in the intermediate part (2).

6. Cutting wire according to claim 1 or 4, characterised by the fact that the joint pins (3, 12) have one or several grooves (14) for securing their position.

7. Cutting wire according to claim 1, characterised by the fact that the joint pins (3, 8) are fixed in the fork by means of a retaining pin, Seeger retaining ring, or by means of riveting, gluing, or spot welding.

8. Cutting wire according to claim 1 characterised by the fact that a sleeve (9) is built in between the joint pins (3, 8) and the intermediate part (2).

## Revendications

1. Câble de sciage pour scier des matériaux minéraux ou contenant des matières minérales, dans des scies machines à câble, le câble de sciage (4) étant formé de plusieurs torons métalliques entre-lacés et comportant une couche de coupe (6) contenant des abrasifs performants, tels le diamant et/ou le nitrure cubique de bore, dans un liant, et le câble de sciage (4) comportant une ou plusieurs fermeture(s) caractérisée(s) par le fait que
a) la fermeture est formée d'une double articulation comprenant deux tiges articulées (20) se croisant en un angle de 90°,
b) chacune des deux parties de l'articulation se compose d'un culot cylindrique (1) fixé au bout respectif du câble de sciage, avec deux faces latérales (19), un axe d'articulation (3) et un raccord commun (2), et que
c) les deux faces latérales (19) de chacun des culots cylindriques (1) sont montées à rotation avec le raccord commun (2), au moyen de l'axe d'articulation (3).

2. Câble de sciage selon revendication 1, caractérisé par le fait que les tiges articulées (20) se croisant en un angle de 90° se situent, dans le raccord (2), à une distance (A) l'une de l'autre de zéro à 3 fois, de préférence de 0,8 à 1,2 fois le diamètre nominal (D) de la couche de coupe (6).

3. Câble de sciage selon revendication 1 ou 2, caractérisé par le fait que les tiges articulées (20) croisées à 90° se situent, dans le raccord (2), dans un plan géométrique perpendiculaire à l'axe longitudinal du câble de sciage (21).

4. Câble de sciage selon revendication 3, caractérisé par le fait que le raccord a la forme d'un croisillon (10).

5. Câble de sciage selon revendication 1 ou 2, caractérisé par le fait que les axes d'articulation ont la forme de boulons filetés (8), le filetage du boulon fileté (8) mordant dans le creux (13) de l'une des deux faces latérales, et la tête du boulon fileté (8), dans le creux (13) de la face latérale opposée de chaque culot cylindrique (1), la partie flexible de l'articulation se situant dans le raccord (2).

6. Câble de sciage selon revendication 1 ou 4, caractérisé par le fait que les axes d'articulation (3,12) sont dotés d'une ou de plusieurs encoches (14) de stabilisation.

7. Câble de sciage selon revendication 1, caractérisé par le fait que les axes d'articulation (3,8) sont fixés dans le culot cylindrique, au moyen d'une goupille fendue, d'un anneau de retenue (type Seeger), par rivetage ou par soudage par points.

8. Câble de sciage selon revendication 1, caractérisé par le fait qu'une bague (9) a été insérée entre les axes d'articulation (3,8) et le raccord (2).
